# EUROPEAN PATENT SPECIFICATION

(11) **EP 1 503 526 B1**
(45) Date of publication and mention of the grant of the patent: **12.11.2008**
(21) Application number: 03291878.1
(22) Date of filing: 29.07.2003
(51) Int. Cl.: H04B 10/10

(54) **System and method for eliminating effect of external interference on active tracking for free space optics communication**
Verfahren und Vorrichtung zum Löschen eines externen Schnittstelleneffekts bei dem aktiven Spurnachlauf für eine optische Freiraumkommunikation
Système et procédé pour l' élimination de l'interface externe lors la poursuite active dans une communication optique en espace libre

(43) Date of publication of application: 02.02.2005
(73) Proprietor: Alcatel Lucent, 75008 Paris (FR)
(72) Inventor: Marazzi, Alberto, 20100 Milano (IT); Milani, Renato, 23900 Lecco (IT); Paoli, Giovanni, 23807 Merate (IT)
(74) Representative: Shamsaei Far, Hassan

(56) References cited:
- US-A- 3 504 182
- US-A1- 2002 154 364
- US-B1- 6 483 621
- US-B1- 6 504 634

## Description

### FIELD OF THE INVENTION

The present invention relates generally to electronic communications systems. More specifically, the present invention relates to communication systems which transmit and receive information signals that are carried by analog or digital modulation of laser light beams, including multiple wavelength transmission for example dense wavelength division multiplexing (DWDM).

The present invention is particularly, but not exclusively useful, for establishing a laser terrestrial communication link with active tracking to maintain the alignment between transmit and receive signals at the two far end terminals. Thus the invention relates in particular to a system and a method to implement an interference-free position sensing for the active alignment of a bi-directional free space optical communications system through atmosphere.

### BACKGROUND OF THE INVENTION

Free space optics in many applications requires active tracking to maintain the alignment between transmit and receive signals at the two far end transmitter and receiver terminals. In many cases the active tracking is obtained by using steering mirrors or by moving the whole receiver to a direction determined on the basis of the signals detected by a quad cells device. The quad cells device, is a multi-element detector of light well known in the related art. The operation of the quad cells is based on focusing or imaging an incoming light on to a detector area as a spot. The position or deviation of the spot is determined by comparing signals from four quadrants in the quad cells. Thus the quad cells provides an equal signal in all four quadrants for an aligned optical system. If any deviation is detected, the quad cells will then provide a feedback signal on corresponding mechanical actuators so that the position of the equipment is changed until the desired equilibrium is established again. The four signals detected corresponding to the four quadrants of the quad cells may be normally amplified as DC current.

The problem associated with this operation is that in practice there are interfering radiations present such as daylight or the solar radiation and under such conditions the device cannot correctly distinguish between the actual optical signal and the external interfering signal. As a result, the tracking system may misalign the transmitter-receiver.

A known solution for avoiding the interfering signals is that of using optical filtering on the system. However this solution suffers from the drawback that heavy filtering would be required which increases the complexity of the systel and the costs involved.

Another solution to the above problem is disclosed in PCT application with publication number WO 02/11298. This solution is based on modulated polarization of the signal. In this solution the signal carrying the information is also modulated by a sinusoidally varying polarization.

On the receiver side the detector of the main information is left insensitive to the polarization, whereas a polarization analyzer is placed on the portion of the received light directed to the quad cells which is usually separated from the main signal by means of a beam-splitter. This prior art solution uses a method to generate and detect a modulated polarization of the light, however such modulated polarization appears to be quite complicated.

US 6,483,621 B1 discloses a method and apparatus for tone tracking in wireless optical communication systems. A transmitted light signal, such as laser light, is modulated by a data signal and by a tracking signal. The tracking signal has a modulation depth that is substantially smaller than a peak-to-peak amplitude of the light signal. At reception, the tracking signal is recovered from the modulated light signal and is used to determine an orientation of a receiver with respect to the transmitted light signal.

It is therefore desired to provide a solution for eliminating the undesired effect of external interference on active tracking operations in free space optics communication that overcomes the above described drawbacks.

### DESCRIPTION OF THE INVENTION

The above objective is reached by using the solution proposed by the present invention which is based on the fact that external interfering signals do not substantially contain high frequency modulation components. Solar and day light, being some of the common interfering lights are basically continuous, albeit certain modulation produced by air scintillation, the main components of which are usually substantially lower than 1 kHz.

On the other hand, artificial lights may comprise components up to 1 MHz for fluorescent lamps and only 50/60 Hz and few harmonics thereof for the incandescent lamps. However the intensity of these lights are normally negligible in an outdoor environment.

As it is known, an optical signal in a free-space optics systems carries information at high bit/rates, namely in the range of Mbit/s to Gbit/s and thus the basic components thereof are much higher in frequency than the interfering lights as described above.

Based on the above concept, the present invention proposes a system and a method in order to distinguish the desired signal from the undesired one by using the electronics available within the quad cells device itself. In this manner, no complex circuitry would be required. According to the solution herein proposed, and described in detail further below, the amplifiers of the quad diodes only amplify the higher frequency modulation components already present in the signal and will stop DC and lower frequencies.

Accordingly one object of the present invention is that of providing a system for eliminating external light interference effects in an active tracking equipment for free space optics communication, said system comprising a receiver for receiving an incoming light beam carrying information at a given frequency, said receiver being moveable in different directions in response to a position correction signal so as to align said receiver with the incoming light beam, the system further comprising a quad cells device for receiving a sample of said incoming light beam and outputting preferably four voltage value components of the received sample, characterized in that said quad cells device is connected to a high pass filter adapted for blocking DC components as well as frequency components lower than a predetermined value from each one of the said preferably four output components of the quad cells device, said predetermined value being lower than said given frequency, the output of the filter (5) being used for determining a position of the incoming light (IL; IL1) with respect to the receiver (1).

Preferably said predetermined frequency value is below about 1 kHz for blocking daylight interference or below about 1 MHz for blocking fluorescent lamps interferences.

The high pass filter is preferably connected to a set of amplifiers for amplifying the filtered signals, said amplifiers being in turn connected to an automatic gain control loop adapted for being driven by a voltage obtained from the sum of output signals of the four amplifiers, said sum being indicative of information relative to differential values of said four components light as a function of the relative position of the incoming light beam received by said quad cells device, whereby said automatic gain control loop generates a control signal on the basis of the sum of the amplified signals received.

The sum of the four amplifiers outputs is equal to zero when the incoming light beam is received at the center of the quad cells device.

According to a preferred embodiment of the invention, the signals from the output of the amplifiers are fed to a set of drivers for driving a set of movement actuators adapted for moving said receiver in a desired direction as a response to a control signal produced by the automatic gain control loop.

Another object of the present invention is that if providing a method for eliminating external light interference effects in an active tracking equipment for free space optics communication, said method comprising the steps of:
- receiving, at a receiver, an incoming light beam carrying information at a given frequency;
- moving said receiver in different directions in response to a position correction signal so as to align said receiver with the incoming light beam;
- receiving a sample of said incoming light beam by a quad cells device and outputting from said quad cells device preferably four voltage value components of the received sample; characterized by the further steps of:

- blocking DC components as well as frequency components lower than a predetermined value from each one of the said preferably four output components of the quad cells device by means of a high pass filter connected at the output of said quad cells device, said predetermined value being lower than said given frequency, and using the output of the filter for determining a position of the incoming light with respect to the receiver.

These and further advantages of the present invention are explained in more detail in the following description as well as in the claims with the aid of the accompanying drawings.

### BRIEF DESCRIPTION OF THE DRAWINGS

Figure 1 is a schematic representation of a conventional arrangement for splitting an incoming light beam between a light beam receiver and a quad cells device.
Figure 2 is a block diagram of a system for eliminating external interference effects in an active tracking arrangement according to the invention.

### DESCRIPTION OF A PREFERRED EMBODIMENT

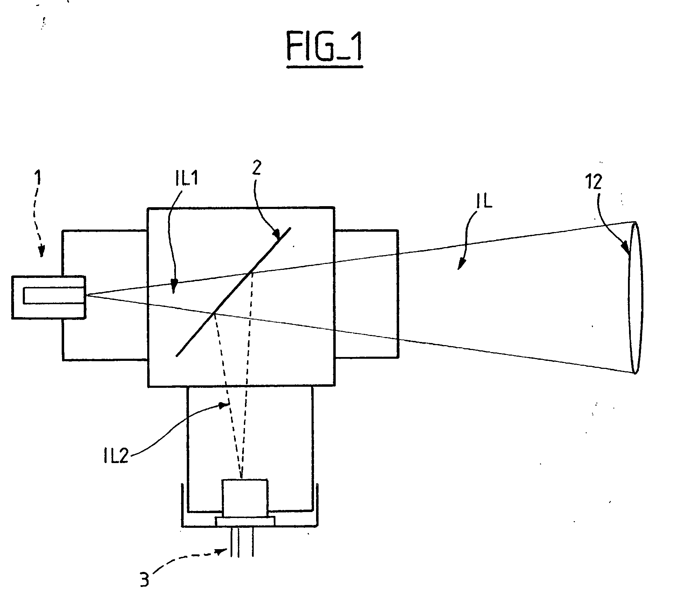

Figure1 represents a conventional arrangement at a receiver end of a light beam carrying an optical signal.

It is to be noted that the term "receiver" in this description refers to any apparatus that receives an optical signal, irrespective of its function at each end of a transmission link. Therefore, transmitters that could receive an optical signal, such as a return signal, for whatever reason are also to be understood to fall within the scope of the term "receiver" for the purpose of this description.

In a conventional arrangement as shown in figure 1, a splitter is placed on the path of the light beam that lets through a main portion of the incoming light beam and reflects a smaller portion thereof into a quad cells device so as to detect the position of the incoming light beam.

It is to be noted that the arrangement of figure 1 is only an example of such an arrangement and that any other known arrangements for optical splitting of the incoming light beam is also understood to be applicable within the scope of the present invention.

The receiver 1 usually comprises a telescope arrangement, however in the figure only a single lens 12 is shown for the sake of simplicity. Nevertheless, the receiver may also comprise any optical scheme such as for example, refractive, reflective or catadioptric, known by skilled persons in the related the art.

The converging incoming light beam IL1 encounters the splitter plate 2 that, by means of a proper coating of its surfaces, allows the major part of the signal IL1 to pass through and continue to be focalized on the main receiver device 1 which could be for example of the type using avalanche photodiodes (APD).

At the same time the splitter plate 2 reflects, preferably at 90°, a certain part of the signal IL2 to a quad cells device 3. The reflected portion IL2 is typically only in the range of 5-10% of the incoming beam IL so as to reduce the attenuation for the main receiver device 1 to the minimum value possible.

If the incoming light IL (and IL1) is not focused onto the center of the quad cells device 3, the four photodiodes incorporated in the quad cell device would then give different values of voltages generated at their respective outputs and these differential values can be amplified and used for determining the deviation of the incoming light IL and correcting the position of the receiver 1 by actuating certain driving means for performing the desired correction of the position as will be described in below.

The incoming light is modulated, for instance, by an On-Off Keying (OOK) signal. The frequency of the light carrying information is in the range of Mbit/s up to Gbit/s according the to the requirements of each particular transmission scheme.

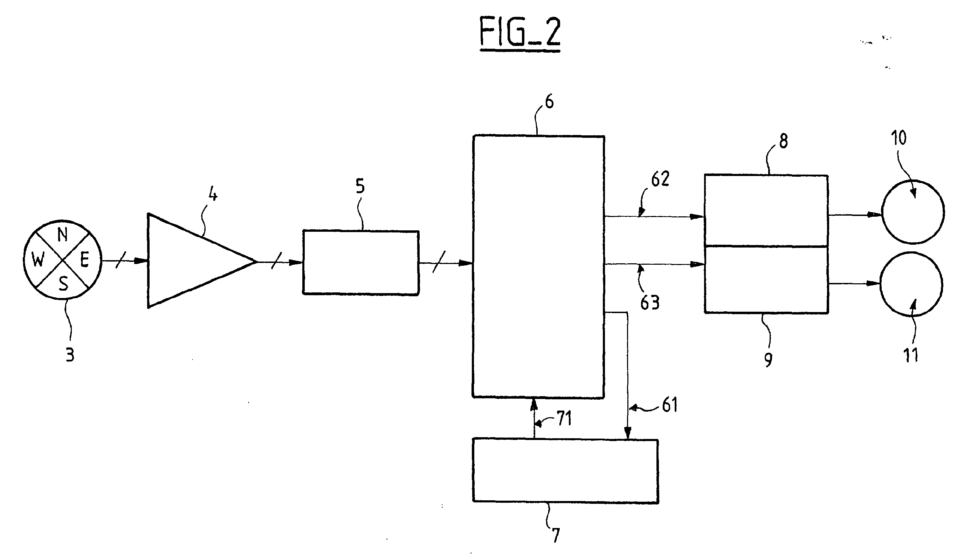

Referring now to figure 2, the quad cells device 3 is shown in conjunction to the rest of the circuitry necessary for detecting deviation and performing the correction of the receiver's position.

In figure 2, the four quadrants of the quad cells device 3 are generated by respective photodiodes shown by references N, S, E, W standing for north, south, east and west respectively. Each of these four quadrants represent a value relative to the deviation of the incoming light expressed in terms of voltages at the output of the photodiodes, which will be referred to also as differential values.

The output of the quad cells device 3, containing the four quadrant values, is fed into a low-noise amplifier 4 which is a conventional device in order to amplify the signals with a minimum the effect on the noise. Next the four quadrant values are fed into a high-pass filter 5. The filter 5 blocks all DC as well as all low frequency components of the optical signal and lets pass through, the higher frequencies which contain the useful information on the optical signal.

The range of frequencies to be blocked by the filter can be determined according to the requirements of each particular application. A preferred range comprises all frequency below about 1 kHz for blocking the daylight effect, and below or up to about 1MHz if it is desired to block interference from fluorescent lamps as well. All frequencies above these values are therefore allowed to pass through the filter.

The output of the filter 5 is fed into a stage shown in the figure by reference numeral 6 comprising a set of amplifiers and a set of envelop detectors for the four quadrants of the optical signal, namely N, S, E, W. The operation of the amplifiers and the envelop detectors are known in the related art and thus for the sake of simplicity a detailed description thereof is considered not necessary.

The four amplification chains within this stage are adapted to operate with AC components from a range of a few kHz up to the upper cut-off limit voltage of the diodes.

The output of the amplifiers, comprising four amplified differential values is fed into an automatic gain control (AGC) device 7 as shown by arrow 61. This is in fact a voltage for driving the AGC 7 and it consist of the sum of the four differential values relative to North-South and East-West. This voltage value is equal to zero only when the incoming light beam IL2 is directed to the center of the quad cells device 3.

Based on the value received at the input, the automatic gain control device 7 generates a response signal 71 containing information relative to the correction of the position of the receiver 1. This is done by feeding from the amplifier stage 6, the appropriate correction information signals 62 and 63 into driver devices 8 and 9 respectively as shown in figure 2. In this example these signals contain correction information for E-W components represented by arrow 62 and N-S component represented by arrow 63. However other combinations may be used without altering the scope of the present invention.

Finally the drivers 8 and 9 trigger respective actuator mechanisms 10 and 11 which move the receiver 1 in the desired directions in order to align the receiver 1 with the incoming light IL (IL1).

In practice, a positive input voltage in the drivers 8 and 9 could cause the drivers to move the respective actuator 10 and 11 in a first direction by means of any known mechanism such as for example steering mirrors, gimbals, etc.; and a negative input voltage in the drivers would cause them to move the respective actuator in a second direction opposite to the first direction. A zero voltage would cause no movement in the actuators.

In this manner a closed loop will be established between the position of the incoming light beam IL and its reflection spot on the quad cells device 3 on the one hand, and the movement of actuators on the other. No movement will occur if the light spot is received at the center of the receiver 1.

## Claims

1. A system for eliminating external light interference effects in an active tracking equipment for free space optics communication, said system comprising: a receiver (1) for receiving an incoming light beam (IL; IL1) carrying information at a given frequency, said receiver (1) being moveable in different directions in response to a position correction signal so as to align said receiver (1) with the incoming light beam (IL; IL1); and a quad cells device (3) for receiving a sample of said incoming light beam and outputting voltage value components, preferably four, of the received sample, **characterized in that** it further comprises a high pass filter (5), wherein said quad cells device (3) is connected to said high pass filter (5), wherein said high pass filter (5) blocks DC components as well as frequency components lower than a predetermined value from each one of the, preferably four, output voltage value components of the quad cells device (3), said predetermined value being lower than said given frequency, the output of the high pass filter (5) being used for determining a position of the incoming light beam (IL; IL1) with respect to the receiver (1).

2. The system according to claim 1, wherein said predetermined frequency value is below about 1 kHz for blocking daylight interference effects or below about 1 MHz for blocking fluorescent lamps interference effects.

3. The system according to claim 1, wherein said high pass filter (5) is further connected to a set of amplifiers for amplifying the filtered signals, said amplifiers being in turn connected to an automatic gain control loop (7) adapted for being driven by a voltage obtained from the sum of output signals of the set of amplifiers, said sum being indicative of information relative to differential values of said, preferably four, voltage value components as a function of the relative position of the incoming light beam (IL; IL1) received by said quad cells device (3), whereby said automatic gain control loop (7) generates a control signal (71) on the basis of the sum of the amplified signals received.

4. The system according to claim 3, wherein said sum of the preferably four amplifiers outputs is equal to zero when the incoming light beam is received at the center of the quad cells device (3).

5. The system according to claim 3 or 4, wherein the signals from the output of the amplifiers are fed to a set of drivers for driving a set of movement actuators adapted for moving said receiver in a desired direction as a response to a control signal produced by the automatic gain control loop.

6. A method for eliminating external light interference effects in an active tracking equipment for free space optics communication, said method comprising the steps of:
- receiving, at a receiver (1), an incoming light beam (IL; IL1) carrying information at a given frequency;
- moving said receiver (1) in different directions in response to a position correction signal so as to align said receiver (1) with the incoming light beam (IL; IL1);
- receiving, at a quad cells device (3), a sample (IL2) of said incoming light beam and outputting from said quad cells device (3) voltage value components, preferably four, of the received sample; **characterized by** the further steps of:
- blocking DC components as well as frequency components lower than a predetermined value from each one of the preferably four output components of the quad cells device (3) by means of a high pass filter (5) connected at the output of said quad cells device (3), said predetermined value being lower than said given frequency, and using the output of the high pass filter (5) for determining a position of the incoming light beam (IL; IL1) with respect to the receiver (1).

7. The method according to claim 6, wherein said predetermined frequency value is below about 1 kHz for blocking daylight interference effects or below about 1 MHz for blocking fluorescent lamps interference effects.

8. The method according to claim 6, wherein it further comprises the steps of amplifying the filtered signals by a set of amplifiers, summing (61) the resulting amplified signals and feeding the resulting summed amplified signals to an automatic gain control loop (7), said sum (61) of the resulting amplified signals being indicative of information relative to differential values of said four components light as a function of the relative position of the incoming light beam (IL2) received by said quad cells device whereby said automatic gain control loop (7) generates a control signal (71) on the basis of the sum (61) of the amplified signals received.

9. The method according to claim 8, wherein it further comprises the step of feeding said control signal (71), through said amplifiers, to a set of drivers (8; 9), said drivers driving a set of movement actuators (10; 11) that move said receiver (1) in a desired direction as a response to said control signal (71).

## Patentansprüche

1. Ein System zum Beseitigen der Auswirkungen einer Störung durch externes Licht in einer aktiven Verfolgungsausrüstung für die Kommunikation in einem optischen Richtfunksystem, wobei das System umfasst: Einen Empfänger (1) für den Empfang eines eintretenden Lichtstrahls (IL; IL1), welcher Informationen bei einer gegebenen Frequenz transportiert, wobei der Empfänger (1) nach Erhalt eines Positionsberichtigungssignals in verschiedene Richtungen beweglich, so dass der besagte Empfänger (1) dem eintretenden Lichtstrahl (IL; IL1) angeglichen wird; und eine Quad-Zellen-Einrichtung (3) für den Empfang eines Musters des besagten eintretenden Lichtstrahls und für die Ausgabe von Spannungswertkomponenten, vorzugsweise vier, des empfangenen Musters, **dadurch gekennzeichnet, dass** es weiterhin einen Hochpass-Filter (5) umfasst, wobei der besagte Hochpass-Filter (5) sowohl DC-Komponenten als auch Frequenzkomponenten unterhalb eines vorgegebenen Wertes von einer jeden der, vorzugsweise vier, ausgegebenen Spannungswertkomponenten der Quad-Zellen-Einrichtung (3) blockiert, wobei der besagte vorgegebene Wert niedriger ist als die besagte gegebene Frequenz, wobei der Ausgang des Hochpass-Filters (5) zur Ermittlung einer Position des eintretenden Lichtstrahls (IL; IL1) in Bezug auf den Empfänger (1) verwendet wird.

2. Das System nach Anspruch 1, wobei der besagte vorgegebene Frequenzwert zum Blockieren von Auswirkungen einer Tageslichtinterferenz unter ca. 1 kHz und zum Blockieren von Auswirkungen einer Leuchstofflampeninterferenz unter ca. 1 MHz liegt.

3. Das System nach Anspruch 1, wobei der besagte Hochpass-Filter (5) weiterhin an einen Satz von Verstärkern angeschlossen ist, um die gefilterten Signale zu verstärken, wobei die besagten Verstärker ihrerseits an eine automatische Verstärkungssteuerungsschleife (7) angeschlossen sind, um von einer aus der Summe der ausgegebenen Signale des Satzes von Verstärkern erhaltenen Spannung angesteuert zu werden, wobei die Summe auf Informationen in Bezug auf die Differentialwerte der besagten, vorzugsweise vier, Spannungswertkomponenten in Abhängigkeit von der relativen Position des von der Quad-Zellen-Einrichtung(3) empfangenen eintretenden Lichtstrahls (IL; IL1) hinweist, wodurch die besagte automatische Verstärkungssteuerungsschleife (7) ein auf der Summe der empfangenen verstärkten Signale basierendes Kontrollsignal (71) erzeugt.

4. Das System nach Anspruch 3, wobei die besagte Summe der Ausgaben der vorzugsweise vier Verstärker gleich Null ist, wenn der eintretende Lichtstrahl im Zentrum der Quad-Zellen-Einrichtung (3) empfangen wird.

5. Das System nach Anspruch 3 oder 4, wobei die Signale des Ausgangs der Verstärker in einen Satz von Treibern eingespeist werden, um einen Satz von Bewegungsbetätigern anzusteuern, welche fähig sind, den besagten Empfänger nach Empfang eines von der automatischen Verstärkungssteuerungsschleife erzeugten Kontrollsignals in eine gewünschte Richtung zu bewegen.

6. Ein Verfahren zum Beseitigen der Auswirkungen einer Storung durch externes Licht in einer aktiven Verfolgungsausrüstung für die Kommunikation in einem optischen Richtfunksystem, wobei das Verfahren die folgenden Schritte umfasst:
- Empfangen, au einem Empfänger (1), eines eintretenden Lichtstrahls (IL; IL1), welcher informationen bei einer gegebenen Frequenz transportiert;
- Bewegen des besagten Empfängers (1) in verschiedene Richtungen nach Empfangen eines Positionsberichtigungssignals, um den besagten Empfänger (1) dem eintretenden Lichtstrahl (IL; IL1) anzugleichen;
- Empfangen, an einer Quad-Zellen-Einrichtung (3), eines Musters (IL2) des besagten eintretenden Lichtstrahls, und Ausgeben durch die besagten Quad-Zellen-Einrichtung (3) von Spannungswertkomponenten, vorzugsweise vier, des empfangenen Musters; **gekennzeichnet durch** die folgenden weiteren Schritte:
- Blockieren sowohl von DC-Komponenten als auch von Frequenzkomponenten unterhalb eines vorgegebenen Wertes von einer jeden der vorzugsweise vier ausgegebenen Komponenten der Quad-Zellen-Einrichtungen (3) anhand eines Hochpass-Filters (5), welcher an den Ausgang der besagten Quad-Zellenn-Einrichtung (3) angeschlossen ist, wobei der besagte vorgegebene Wert niedriger ist als die besagte gegebene Frequenz, wobei der Ausgang des Hochpass-Filters (5) zur Ermittlung einer Position des eintretenden Lichtstrahls (IL; IL1) in Bezug auf den Empfänger (1) verwendet wird.

7. Das Verfahren nach Anspruch 6, wobei der besagte vorgegebene Frequenzwert zum Blockieren von Auswirkungen einer Tageslichtinterferenz unter ca. 1 kHz und zum Blockieren von Auswirkungen einer Leuchstofflampeninterferenz unter ca. 1 MHz liegt.

8. Das Verfahren nach Anspruch 6, weiterhin umfassend die Schritte des Verstärkens der gefilterten Signale über einen Satz von Verstärkern, des Summierens (61) der sich daraus ergebenden verstärkten Signale, und des Einspeisens der sich daraus ergebenden summierten verstärkten Signale in eine automatische Verstärkungssteuerungsschleife (7), wobei die besagte Summe (61) der sich daraus ergebenden verstärkten Signale auf Informationen in Bezug auf die Differentialwerte der besagten vier Komponenten in Abhängigkeit von der relativen Position des von der Quad-Zellen-Einrichtung empfangenen eintretenden Lichtstrahls (IL2) hinweist, wodurch die besagte automatische Verstärkungssteuerungsschleife (7) ein auf der Summe (61) der empfangenen verstärkten Signale basierendes Kontrollsignal (71) erzeugt.

9. Das Verfahren nach Anspruch 8, weiterhin umfassend den Schritt des Einspeisens des besagten Kontrollsignals (71), über die besagten Verstärker, in einen Satz von Treibern (8; 9), wobei die besagten Treiber einen Satz von Bewegungsbetätigern (10; 11) ansteuern, welche den besagten Empfänger (1) nach Empfang des besagten Kontrollsignals (71) in eine gewünschte Richtung bewegen.

## Revendications

1. Système d'élimination des effets d'interférence de lumière externe dans un équipement d'alignement actif pour une communication optique sans fil, ledit système comprenant : un récepteur (1) destiné à recevoir un faisceau lumineux entrant (IL ; IL1) transportant des informations à une fréquence donnée, ledit récepteur (1) étant mobile dans différentes directions en réponse à un signal de correction de position de façon à aligner ledit récepteur (1) avec le faisceau lumineux entrant (IL ; IL1) ; et un dispositif à quatre cellules (3) destiné à recevoir un échantillon dudit faisceau lumineux entrant et à émettre en sortie des composants de valeur de tension, de préférence quatre, de l'échantillon reçu, **caractérisé en ce qu'**il comprend en outre un filtre passe haut (5), dans lequel ledit dispositif à quatre cellules (3) est connecté audit filtre passe haut (5), dans lequel ledit filtre passe haut (5) bloque les composants DC ainsi que les composants de fréquence inférieurs à une valeur prédéterminée de chacun desdits de préférence quatre composants de valeur de tension de sortie du dispositif à quatre cellules (3), ladite valeur prédéterminée étant inférieure à ladite fréquence donnée, la sortie du filtre passe haut (5) étant utilisée pour déterminer une position du faisceau lumineux entrant (IL ; IL1) par rapport au récepteur (1).

2. Système selon la revendication 1, dans lequel ladite valeur de fréquence prédéterminée est inférieure à environ 1 kHz pour bloquer les effets d'interférence de la lumière du jour ou inférieure à environ 1 MHz pour bloquer les effets d'interférence de lampes fluorescentes.

3. Système selon la revendication 1, dans lequel ledit filtre passe haut (5) est en outre connecté à un ensemble d'amplificateurs destinés à amplifier les signaux filtrés, lesdits amplificateurs étant à leur tour connectés à une boucle de commande automatique de gain (7) adaptée pour être commandée par une tension obtenue à partir de la somme des signaux de sortie de l'ensemble d'amplificateurs, ladite somme étant indicative d'informations relatives à des valeurs différentielles desdits de préférence quatre composants de valeur de tension en fonction de la position relative du faisceau lumineux entrant (IL ; IL1) reçu par ledit dispositif à quatre cellules (3), grâce à quoi ladite boucle de commande automatique de gain (7) génère un signal de commande (71) sur la base de la somme des signaux amplifiés reçus.

4. Système selon la revendication 3, dans lequel ladite somme des de préférence quatre sorties des amplificateurs est égale à zéro lorsque le faisceau lumineux entrant est reçu au centre du dispositif à quatre cellules (3).

5. Système selon la revendication 3 ou 4, dans lequel les signaux de la sortie des amplificateurs sont appliqués un ensemble de pilotes destinés à piloter un ensemble d'actionneurs de mouvement adaptés pour déplacer ledit récepteur dans une direction souhaitée en réponse à un signal de commande produit par la boucle de commande automatique de gain.

6. Procédé d'élimination des effets d'interférence de lumière externe dans un équipement d'alignement actif pour une communication optique sans fil, ledit procédé comprenant les étapes suivantes :
réception, au niveau d'un récepteur (1), d'un faisceau lumineux entrant (IL ; IL1) transportant des informations à une fréquence donnée ;
déplacement dudit récepteur (1) dans différentes directions en réponse à un signal de correction de position de façon à aligner ledit récepteur (1) avec le faisceau entrant (IL ; IL1) ;
réception, sur un dispositif à quatre cellules (3), d'un échantillon (IL2) dudit faisceau lumineux entrant et émission en sortie par ledit dispositif à quatre cellules (3) de composants de valeur de tension, de préférence quatre, de l'échantillon reçu :
**caractérisé par** les étapes supplémentaires suivantes :
blocage des composants DC ainsi que des composants de fréquence inférieurs à une valeur prédéterminée de chacun des de préférence quatre composants de sortie du dispositif à quatre cellules (3) au moyen d'un filtre passe haut (5) connecté à la sortie dudit dispositif à quatre cellules (3), ladite valeur prédéterminée étant inférieure à ladite fréquence dénuée, et utilisation de la sortie du filtre passe haut (5) pour déterminer une position du faisceau lumineux entrant (IL ; IL1) par rapport au récepteur (1).

7. Procédé selon la revendication 6, dans lequel ladite valeur de fréquence prédéterminée est inférieure à environ 1 kHz pour bloquer les effets d'interférence de la lumière du jour ou à environ 1 MHz pour bloquer les effets d'interférence de lampes fluorescentes.

8. Procédé selon la revendication 6, comprenant en outre les étapes d'amplification des signaux filtrés au moyen d'un ensemble de récepteurs, la sommation (61) des signaux amplifiés résultants et l'application des signaux amplifiés sommés résultants à une boucle de commande automatique de gain (7), ladite somme (61) des signaux amplifiés résultants étant indicative d'informations relative à des valeurs différentielles desdits quatre composants en fonction de la position relative du faisceau lumineux entrant (IL2) reçu par ledit dispositif à quatre cellules, grâce à quoi ladite boucle de commande automatique de gain (7) génère un signal de commande (71) sur la base de la somme (61) des signaux amplifiés reçus.

9. Procédé selon la revendication 8, comprenant en outre l'étape d'application dudit signal de commande (71), par l'intermédiaire desdits amplificateurs, à un ensemble de pilotes (8 ; 9), lesdits pilotes pilotant un ensemble d'actionneurs de mouvement (10 ; 11) qui déplacent ledit récepteur (1) dans une direction souhaitée en réponse audit signal de commande (71).
